(19) **Europäisches Patentamt European Patent Office Office européen des brevets**

(11) **EP 1 893 546 B1**

(12) **EUROPEAN PATENT SPECIFICATION**

(45) Date of publication and mention of the grant of the patent:
**25.12.2019 Bulletin 2019/52**

(51) Int Cl.:
**C04B 14/28** (2006.01)  **C04B 28/02** (2006.01)
**C04B 28/12** (2006.01)  **C04B 28/14** (2006.01)

(21) Application number: **06777295.4**

(22) Date of filing: **12.06.2006**

(86) International application number:
**PCT/EP2006/063073**

(87) International publication number:
**WO 2006/134080 (21.12.2006 Gazette 2006/51)**

(54) **USE OF PARTICLES OF CALCIUM CARBONATE IN THE PRODUCTION OF CONSTRUCTION MATERIALS**

VERWENDUNG VON CALCIUMCARBONATPARTIKELN IN DER HERSTELLUNG VON BAUMATERIALIEN

UTILISATION DE PARTICULES DE CARBONATE DE CALCIUM DANS LA PRODUCTION DE MATERIAUX DE CONSTRUCTION

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.06.2005 IT MI20051124**
**31.01.2006 IT MI20060157**

(43) Date of publication of application:
**05.03.2008 Bulletin 2008/10**

(73) Proprietor: **IMERTECH SAS**
**75015 Paris (FR)**

(72) Inventors:
• **CERVELLATI, Gianfranco**
**I-44100 Ferrara (IT)**
• **ROSA, Roberto**
**I-21020 Ranco (IT)**

(74) Representative: **Haseltine Lake Kempner LLP**
**Redcliff Quay**
**120 Redcliff Street**
**Bristol BS1 6HU (GB)**

(56) References cited:
EP-A1- 1 176 124    EP-A2- 0 143 363
WO-A-01/58994    WO-A1-03/004414
DE-A1- 19 738 481    JP-A- H1 192 202

Remarks:
The file contains technical information submitted after the application was filed and not included in this specification

**Description**

The invention relates to the production of construction materials, in particular plaster, stucco, cement render, mortar and concrete. More specifically, it relates to the use of particles of calcium carbonate in the production of construction materials.

Plaster, stucco, cement render, mortar and concrete can be in the form of pasty construction materials that harden on drying and are extensively used in the construction industry i.e. for coating walls, floors, ceilings and partitions, for sticking bricks or for making building parts. They can be used outside and inside buildings. Such construction materials usually contain a binder such as cement, lime or gypsum and a mineral aggregate such as sand, gravel or a lightweight mineral aggregate, and water.

The binder acts as an adhesive between the smaller particles of the mineral aggregates (rock and sand) which coalesce into a solid mass. Other additives can be added to such mixtures in order to control properties of fresh or hardened materials : setting and hardening rate, consistence, porosity, corrosion, fungicidal properties, insecticide or germicidal resistance, permeability, pigmentation, etc. Depending on their use, the hardened materials must exhibit numerous properties like high mechanical resistance (to fissuring and scratch, for instance), high heat resistance, high thermal insulation, high sound insulation, high sound absorption, high anti-humidity effect (anti salts rising), high permeability to water vapor but low permeability to liquid water, good surface aspect, resistance to ultraviolet light, to mention only a few. However, it is difficult to obtain mixtures exhibiting simultaneously several of such properties with classical construction materials. For instance, currently, it is not possible to find on the market materials having good sound absorption properties and high abrasion resistance. There is then a continuous need for preparing new construction materials with better properties.

JP H11 92202 A describes calcium carbonate as additive for Portland cement, the calcium carbonate has a particle size of 2-200 micrometer and is coated with a fatty acid.

It is the aim of this invention to provide construction materials with improved properties.

The invention relates then to the use of particles of calcium carbonate having a BET specific surface area higher than or equal to 10 $m^2/g$ in the production of construction materials.

It has surprisingly been found that when in classical pasty construction materials, sand is partially replaced by particles of calcium carbonate with a high surface area, simultaneously several of the following properties, good mechanical resistance, low porosity, high permeability to water vapor, low permeability to liquid water, low surface water absorption, improved flexural strength, improved impact resistance, good surface aspect and high resistance to UV are obtained for the resulting hardened materials.

It has also surprisingly been found that when in classical pasty construction materials, sand is partially replaced by particles of calcium carbonate with a high surface area, simultaneously good consistence and high workable life are obtained for the pasty construction materials before hardening.

It has surprisingly been found that when in classical pasty construction materials, the lightweight mineral aggregate (which is an inert material) is partially replaced by particles of calcium carbonate with a high surface area, simultaneously high porosity, low specific weight, high abrasion resistance and high sound absorption are obtained for the resulting hardened materials.

Using calcium carbonate particles according to the invention, it is possible to obtain innovative sound absorption materials with simultaneously high sound absorption, high abrasion resistance and colored surface aspect.

Moreover, with respect to conventional sound insulation and/or sound absorption materials like polyurethane foam panels for instance, and besides having comparable sound absorption properties, the resulting hardened materials according to the invention present the following advantages. They can be applied directly on substrates or as pre-cast panels. They can be obtained in various colors by using adequate pigments. They are non-flammable and should not emit toxic smokes. They exhibit an improved resistance to mechanical stress. It has also been found that when in classical pasty construction materials, sand or the lightweight mineral aggregate is partially replaced by particles of calcium carbonate with a high surface area, other properties of the resulting hardened materials can also be improved like for instance sound insulation, anti-humidity effect (anti salts rising) and thermal insulation.

The construction materials where the particles of calcium carbonate having a surface area higher than or equal to 10 $m^2/g$ have been incorporated can be used for exterior and interior applications.

The construction materials are defined as materials used in the building of works of civil engineering, of public works or of architecture.

More specifically, the construction materials include plaster, stucco, cement render, mortar and concrete, and the resulting hardened materials. Such hardened materials can be of any shape like for instance sealants, coatings, blocks, bricks and panels.

The particles of calcium carbonate used in the invention are precipitated calcium carbonate (PCC) particles.

Particles of PCC may be manufactured by first preparing a calcium oxide (quick lime) by subjecting limestone to calcination by burning a fuel, such as coke, a petroleum fuel (such as heavy or light oil), natural gas, petroleum gas (LPG) or the like, and then reacting the calcium oxide with water to produce a calcium hydroxide slurry (milk or lime), and reacting the calcium hydroxide slurry with carbon dioxide to obtain the desired particle size and shape PCC (carbonation process). Carbon dioxide can be discharged from a calcination furnace for obtaining the calcium oxide from limestone, from gases from power plants or from liquid $CO_2$ containers for instance. It is preferred to use carbon dioxide discharged from a calcination furnace for obtaining the calcium oxide from limestone. Precipitation of calcium carbonate can also be carried out by adding an alkali metal carbonate starting with lime water (caustification method) or by the addition of an alkali metal carbonate starting with solutions containing calcium chloride. PCC particles obtained from the carbonation process are preferred.

The calcium carbonate can be substantially amorphous or substantially crystalline. Substantially amorphous or crystalline is understood to mean that more than 50 % by weight, especially more than 75 % by weight, more particularly more than 90% by weight of the calcium carbonate is in the form of amorphous or crystalline material when analyzed by an X-ray diffraction technique. Substantially crystalline calcium carbonate is preferred. Crystalline calcium carbonate can consist of calcite or aragonite or a mixture of these two crystalline phases. The calcite phase is preferred.

By particles, one intends to denote clusters of primary particles. Crystallites or primary particles are defined as the smallest discrete particles that can be seen by Electron Microscopy analysis.

In the case where the calcium carbonate is synthetic calcium carbonate, the primary particles can be of any shape. They may have the form of needles, scalenohedrons, rhombohedrons, spheres, platelets or prisms. A rhombohedral shape that can be reduced to pseudo-cubes or pseudo-spheres, is preferred. The shape of the primary particles can be obtained from Electron Microscopy analysis.

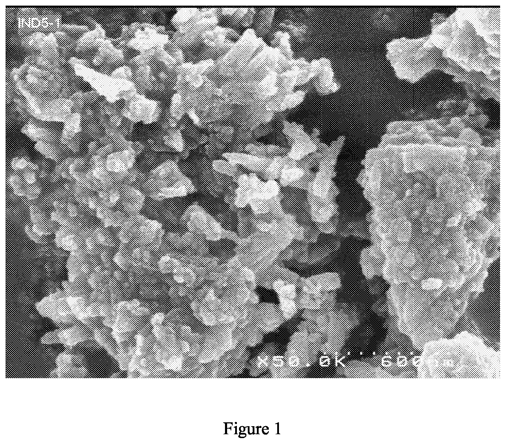

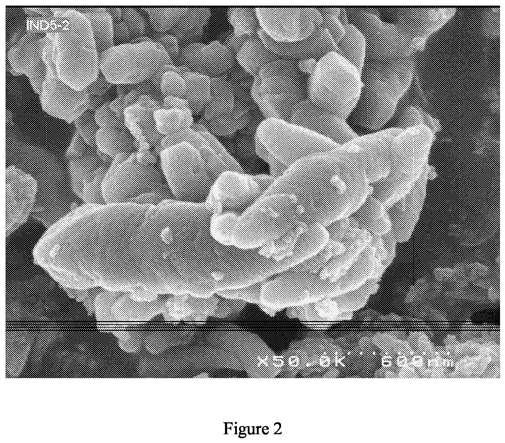

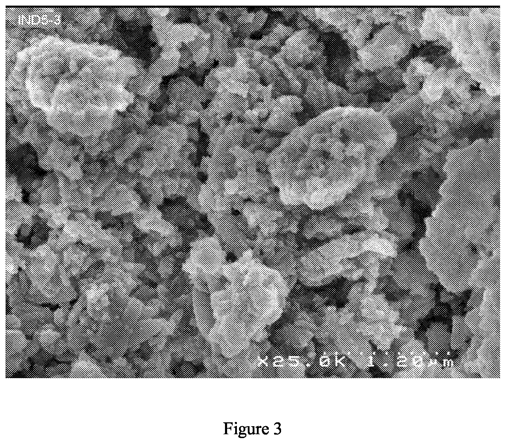

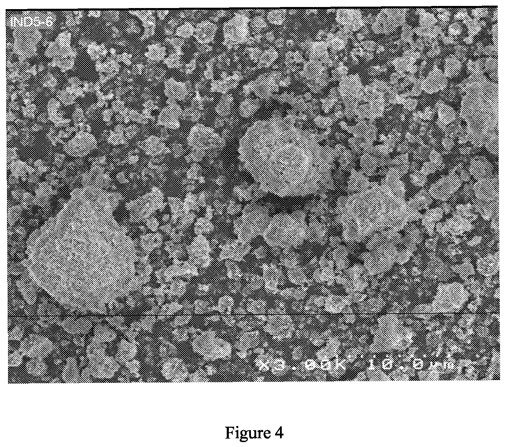

The clusters of the primary particles of calcium carbonate can exhibit various structures, such as for example those presented in the pictures obtained by Scanning Electron Microscopy in Figures 1 to 4. They occur as hollow spheres, nano-fibers, nano-sheaves, nano-rosaries, nano-platelets and nano-accordions. Hollow spheres and nano-sheaves are particularly preferred structures.

Hollow spheres are defined as hollow aggregates of particles having a mean primary particle size dp of less than 100 nm. They can be obtained by spray-drying of coated PCC suspensions. The mean primary particles size dp is measured by the Léa -Nurse method (Standard NFX 11-601, 1974). The $d_P$ value is obtained from the massic area ($S_M$) derived from the Léa and Nurse method by making the assumptions that all the particles are spherical, non porous and of equal diameter, and by neglecting contact surfaces between the particles.

The relationship beween $d_P$ and $S_M$ is the following :

$$d_P = 6/(\rho \, S_M)$$

where
$\rho$ is the specific mass of the calcium carbonate.

Nano-fibers, nano-sheaves, nano-rosaries, nano-platelets and nano-accordions are structures such as those obtained by means of the method described and claimed in patent application WO 03/004414 of SOLVAY (Société Anonyme). Nano-sheaves are called nano-faggots in that patent application. The definitions of nano-fibers, nano-sheaves, nano-rosaries, nanoplatelets and nano-accordions are given in document WO 03/004414 of SOLVAY (Société Anonyme), page 5, line 33 to page 7, line 9 and are incorporated herein by reference.

The mean diameter of the aggregates of calcium carbonate can vary to a large extent. However, this diameter is generally less than or equal to 20 $\mu$m, preferably less than or equal to 4 $\mu$m. Aggregates with a diameter of less than or equal to 600 nm are especially advantageous, diameters of less than or equal to 100 nm being preferred. Aggregates with a diameter of greater than or equal to 15 nm are highly suitable. Aggregates with a diameter of greater than or equal to 60 nm are particularly well suited. The mean diameter of the aggregates is obtained on the basis of the size distribution of the particles determined by the sedimentation method using a Micromeritics SediGraph 5 100 measuring device for sizes ranging from 0.1 to 300 $\mu$m (standard ISO 13317-3) and using a Horiba CAPA 700 measuring device for sizes ranging from 0.01 to 300 $\mu$m (standard ISO 13318-2). It is the diameter of the aggregates of the individual particles for which 50% of the distribution (by weight, measured by the sedimentation technique) is smaller and 50% of the distribution is greater ($D_{50}$).

The calcium carbonate particles used in the invention have a BET specific surface area higher than or equal to 10 $m^2/g$, preferably higher than or equal to 15 $m^2/g$, more preferably higher than or equal to 20 $m^2/g$, still more preferably higher than or equal to 40 $m^2/g$ and in particular higher than or equal to 70 $m^2/g$. The particles according to the invention have generally a BET specific surface area lower than or equal to 300 $m^2/g$ preferably lower than or equal to 250 $m^2/g$, more preferably lower than or equal to 200 $m^2/g$, still more preferably lower than or equal to 150 $m^2/g$ and in particular lower than or equal to 100 $m^2/g$. The BET specific surface area is measured according to the standard ISO 9277-1995.

The calcium carbonate particles have usually a mean primary particle size ($d_p$) higher than or equal to 5 nm, preferably higher than or equal to 10 nm, more preferably higher than or equal to 30 nm, still more preferably higher than or equal to 50 nm and most preferably higher than or equal to 70 nm. The mean primary particle size is generally lower than or equal to 20 $\mu$m, preferably lower than or equal to 10 $\mu$m, more preferably lower than or equal to 1 $\mu$m and most preferably lower than or equal to 0.1 $\mu$m. The mean primary particle size ($d_p$) is measured according to the Standard NFX 11-601, 1974 as described above.

The calcium carbonate particles used in the invention are coated with at least one coating agent selected from carboxylic acids, carboxylic acid salts, polyacrylic acids, polyacrylic acid salts and mixtures thereof.

The carboxylic acid may be aliphatic or aromatic. Aliphatic carboxylic acids are preferred.

The aliphatic carboxylic acid may be any linear or branched or cyclic, substituted or non substituted, saturated or unsaturated, aliphatic carboxylic acid. The aliphatic carboxylic acid has usually a number of carbon atoms greater than or equal to 4, preferably greater than or equal to 8, more preferably greater than or equal to 10 and most preferably greater than or equal to 14. The aliphatic carboxylic acid has generally a number of carbon atoms lower than or equal to 32, preferably lower than or equal to 28, more preferably lower than or equal to 24 and most preferably lower than or equal to 22.

The aliphatic carboxylic acid can be selected from the group of substituted, non substituted, saturated and unsaturated fatty acids or mixtures thereof. More preferably it is selected from the group consisting of caproic acid, caprylic acid, capric acid, lauric acid, myristic acid, palmitic acid, stearic acid, iso-stearic acid, hydroxystearic acid, arachidic acid, behenic acid, lignoceric acid, cerotic acid, montanic acid, melissic acid, myristoleic acid, palmitoleic acid, petroselinic acid, petroselaidic acid, oleic acid, elaidic acid, linoleic acid, linolelaidic acid, linolenic acid, linolenelaidic acid, a-eleostaeric acid, b-eleostearic acid, gadoleic acid, arachidonic acid, erucic acid, brassidic acid and clupanodonic acid, mixtures thereof or salts derived therefrom. Mixtures containing mainly palmitic, stearic and oleic acids are more preferred. Mixtures called "stearine" which consist of about 30 - 40 wt % stearic acid, of about 40 - 50 wt % palmitic acid and of about 13 - 20 wt % oleic acid are particularly preferred.

The aliphatic carboxylic acid can be a rosin acid selected from the group consisting of levopimaric acid, neoabietic acid, palustric acid, abietic acid, dehydroabietic acid, mixtures thereof or salts derived therefrom.

In case that the coating agent is a salt of an aliphatic carboxylic acid, this may be the calcium salt of the carboxylic acid. However, the coating agent may also be present e.g. in form of the sodium, potassium or ammonium salt of the aliphatic carboxylic acid.

The coating agent may be applied to the particles by any suitable method. For instance, the coating agent can be dispersed or emulsified in liquid or solid form, preferably as an emulsion with the dispersed calcium carbonate, for example, during the grinding process or before, during and/or after the precipitation, the coating agent adhering to the surface of the calcium carbonate.

Preferably, the treatment of the alkaline earth metal carbonate with the coating agent takes place in emulsified form in an aqueous system. For further details, it can be referred to e.g. US 6,342,100 of SOLVAY SODA DEUTSCHLAND GmbH with is fully incorporated by reference herein.

The calcium carbonate particles can be coated with a polyacrylic acid, a polyacrylic acid salt or with a mixture thereof. The molecular weight of the polyacrylic acid is generally higher than or equal to 500 g/mol, preferably higher than or equal to 700 g/mol and most preferably higher than or equal to 1 000 g/mol. That molecular weight is usually lower than or equal to 15 000 g/mol, ideally lower than or equal to 4 000 g/mol and in particular lower than or equal to 2 000 g/mol.

In case that the coating agent is a salt of a polyacrylic acid, this may be the calcium salt of the polyacrylic acid. However, the coating agent may also be present e.g. in form of the sodium, potassium or ammonium salt of the polyacrylic acid. The sodium salt is preferred.

In case that the coating agent is a salt of a polyacrylic acid, it may be the crystallization controller as defined in document WO 03/004414 of SOLVAY (Société Anonyme), page 2, lines 24 to 31 which is incorporated herein by reference.

Preferably, the calcium carbonate particles used in the invention are coated with a coating agent the content of which being usually higher than or equal to 0.0001 wt %, preferably higher than or equal to 0.001 wt %, yet preferably higher than or equal to 0.01 wt % and most preferably higher than or equal to 0.05 wt %, based on the total weight of the particles. The coating agent content of the particles according to the invention is generally lower than or equal to 60 wt %, preferably lower than or equal to 25 wt %, yet preferably lower than or equal to 10 wt % and most preferably lower than or equal to 6 wt %, based on the total weight of the particles.

The calcium carbonate particles used in the invention are incorporated in construction materials, or in dry premixes that are to be mixed at least with water for the preparation of construction materials, or also in wet premixes that are to be mixed with at least one binder and at least one foaming agent for the preparation of construction materials. The construction materials can be selected typically from plaster, stucco, cement render, mortar and concrete or mixtures thereof.

The invention therefore also relates to construction materials containing :

- At least one inorganic binder selected from cement, hydraulic lime and gypsum,
- At least one mineral aggregate selected from sand and lightweight mineral aggregates,
- Optionally at least one coloring compound selected from pigments and dyes,
- water, and
- optionally at least one other additive selected from polymeric resins, surface-active agents, colloids, thickeners, alkali agents, co-solvents, wetting and dispersing agents, biocides, foaming agents, anti-foaming agents, anti-settling agents, fibers and organic binders,

and wherein particles of calcium carbonate having a BET specific surface area higher than or equal to 10 m$^2$/g according to the invention have been incorporated.

The invention also relates to dry premixes to be mixed at least with water for the preparation of construction materials, consisting of :

- at least one inorganic binder selected from cement, hydraulic lime and gypsum
- at least one mineral aggregate selected from sand and lightweight mineral aggregates,
- optionally at least one coloring compound selected from pigments and dyes, and
- optionally at least one other additive selected from polymeric resins, surface-active agents, colloids, thickeners, alkali agents, co-solvents, wetting and dispersing agents, biocides, foaming agents, anti-foaming agents, anti-settling agents, fibers and organic binders,

and wherein particles of calcium carbonate having a BET specific surface area higher than or equal to 10 m$^2$/g according to the invention have been incorporated.

The invention further relates to wet premixes to be mixed with at least one binder and at least one foaming agent for the preparation of construction materials, consisting of :

- at least one mineral aggregate selected from sand and lightweight mineral aggregates,
- optionally at least one coloring compound selected from pigments and dyes,
- optionally at least one other additive selected from polymeric resins, surface-active agents, colloids, thickeners, alkali agents, co-solvents, wetting and dispersing agents, biocides, anti-foaming agents, anti-settling agents, fibers, organic binders, and
- water,

and wherein particles of calcium carbonate having a BET specific surface area higher than or equal to 10 m$^2$/g according to the invention have been incorporated.

The inorganic binder is selected from cement, hydraulic lime, gypsum and mixtures thereof. Cement, hydraulic lime and mixtures thereof are preferred.

By gypsum, one intends to designate any composition containing as major components calcium sulfate ($CaSO_4$), calcium sulfate hemihydrate ($CaSO_4.1/2H_2O$) or any mixture thereof, as described in "Wirsching Franz, Gebrüder Knauf Westdeutsche Gipswerke, Iphofen, Federal Republik of Germany, Ullmann's Encyclopedia of Industrial Chemistry, Fifth, Completely Revised Edition, Volume A4, Page 555, Calcium Sulfate."

By cement, one intends to designate any composition containing as major components calcium silicates (tri- and dicalcium silicates), calcium aluminates and calcium aluminoferrites, calcium oxide and silicon oxide as defined in the standard UNI EN 197-1-2001. The various types of cement such as those described in "Siegbert Sprung, Forschungsinstitut der Zementindustrie, Düsseldorf, Federal Republic of Germany, Ullmann's Encyclopedia of Industrial Chemistry, Sixth, Completely Revised Edition, Volume 7, Page 1, Cement and Concrete, Chapter 1." can be convenient. They include but are not limited to Standardized Common cements like Portland Cement, Portland composite cement (Portland slag cement, Portland silica fume cement, Portland pozzolanic cement, Portland fly ash cement, Portland shale cement, Portland limestone cement), Blast-furnace cement, Pozzolanic cement and Composite cement and Standardized Special cements like Sulfate-resistant cements, Low-heat cements, Low-alkali cements, calcium aluminate cement and Special cements like Supersulfated cements, Water-repellent cements, Oil-well cements, Regulated set cements, Expanding cements and Masonry cements. Portland type cements are more particularly preferred.

The cement can be obtained by known processes as such described in "Siegbert Sprung, Forschungsinstitut der Zementindustrie, Düsseldorf, Federal Republic of Germany, Ullmann's Encyclopedia of Industrial Chemistry, Sixth, Completely Revised Edition, Volume 7, Page 1, Cement and Concrete, Chapter 1."

By hydraulic lime (HL), one intends to designate any composition containing calcium hydroxide ($Ca(OH)_2$), calcium silicate and aluminates as major components according to the standard UNI EN 459-1. This means that the content of $Ca(OH)_2$ in weight percent of the HL composition is higher than the weight percent of any other component. It is preferable to use hydraulic lime where the content of $Ca(OH)_2$ is higher than or equal to 50 wt %, preferably higher than or equal to 75 wt %, more preferably higher than or equal to 90 wt %, still more preferably higher than or equal to 95 wt % and most preferably higher than or equal to 99 wt % of the total weight of the composition. Calcium hydroxide ($Ca(OH)_2$) can be obtained by any known method, for instance by making quicklime (CaO) by thermal decomposition of limestone and by further slaking quick lime with water. For the various production processes of manufacturing, it can be referred to "Tony Oates, Limetec Consultancy Services, Buxton, Derbyshire, United Kingdom, Ullmann's Encyclopedia of Industrial Chemistry, Fifth, Completely Revised Edition, Volume A 15, Page 317, Lime and Limestone, Chapter 4". Cement, hydraulic lime and mixture thereof are preferred. Mixtures of cement and hydraulic lime are known as bastard lime (BL).

The cement content in the mixture of cement and hydraulic lime is usually higher than or equal to 10 wt %, preferably higher than or equal to 20 wt %, more preferably higher than or equal to 30 wt %, still more preferably higher than or equal to 40 wt % and most preferably higher than or equal to 45 wt % of the total weight of the mixture. It is generally lower than or equal to 90 wt %, preferably lower than or equal to 80 wt %, more preferably lower than or equal to 70 wt %, still more preferably lower than or equal to 60 wt % and most preferably lower than or equal to 55 wt % of the total weight of the mixture.

The calcium hydroxide content in the mixture of cement and hydraulic lime is usually higher than or equal to 10 wt %, preferably higher than or equal to 20 wt %, more preferably higher than or equal to 30 wt %, still more preferably higher than or equal to 40 wt % and most preferably higher than or equal to 45 wt % of the total weight of the mixture. It is generally lower than or equal to 90 wt %, preferably lower than or equal to 80 wt %, more preferably lower than or equal to 70 wt %, still more preferably lower than or equal to 60 wt % and most preferably lower than or equal to 55 wt % of the total weight of the mixture.

Other compounds can be present in the construction material according to the invention. Those compounds are usually used for the preparation of plaster, cement render, mortar, concrete or other materials for construction. They include but are not limited to sand, lightweight materials, polymeric resins (i.e. polyvinyl acetate), surface-active agents (i.e. polymeric wetting agents, colloids (i.e., methyl cellulose), pigments, dyes, thickener, alkali agent, co-solvents, wetting and dispersing agents, biocide, foaming agent, anti-foaming agent, anti-settling agent, fibers, organic binder and water.

By pigments, one intends to denote a water insoluble coloring organic or inorganic substance. Inorganic substances different from the calcium carbonate particle used in the invention are preferred. They can be selected from metal oxides (like iron oxides, chromium oxides, titanium oxide for instance), clays, natural earths, other inorganic compounds (cobalt blues, bismuth vanadate, chrome yellows, molybdate reds for instance). Organic pigments are also well known in the construction industry and involve among others: carbon black, monoazo pigments, isoindolinone pigments, naphthalene tetracarboxylic acid pigments, dibromanthanthrone pigments, perylene tetracarboxylic acid pigments, anthraquinone pigments, quinacridone pigments, heterocyclic Ni-complex pigments, dioxazine pigments, indanthrone pigments, phthalocyanines, disazo pigments, isoindoline pigments, azo condensation pigments, manganese salts of monoazo dyes and thiazine pigments. By dyes, one intends to denote a water soluble coloring organic or inorganic substance. Examples of such substances are methane dyes (triphenylmethane dyes in particular), azo dyes, nitro dyes, nitroso dyes, phthalein dyes, indigoid dyes, antraquinone dyes, alizarine dyes, aniline dyes, methylene blue and reactive dyes.

Pigments are preferred. Inorganic pigments are more preferred.

Sand is a loose material consisting of small mineral particles or rock and mineral particles distinguishable by the naked eye. Grain vary from almost spherical to angular, with diameter range from 1/16 mm to 2 mm. Sand is often the principal component of the mineral aggregate used in the preparation of concrete. By sand, one intends to denote any composition which contains silicon dioxide as the major component. The content of silicon dioxide is generally higher than or equal to 50 % by weight, preferably higher than or equal to 75 % and most preferably higher than or equal to 90 %. Silicon dioxide is preferably in the form of quartz. The quartz content of silicon dioxide is generally higher than or equal to 50 % by weight, preferably higher than or equal to 75 % and most preferably higher than or equal to 90 %. Such sand composition is found in inland continental settings and non-tropical coastal settings. Sand can also contain other constituents such as iron, feldspar and gypsum.

By lightweight mineral aggregates, one intends to denote inorganic solid materials with a bulk density lower than or equal to 1 $g/cm^3$, preferably lower than or equal to 0.5 $g/cm^3$, and most preferably lower than or equal to 0.2 $g/cm^3$. The definition of the bulk density and the method of measurement is defined in "Rouquerol, J., D. Avnir, C. W. Fairbridge, D. H. Everett, J. H. Haynes, N. Pernicone, J. D. F. Ramsay, K. S. W. Sing, and K. K. Unger, "Recommendations for the Characterization of Porous Solids," Pure Appl. Chem., 66, 1739 (1994) ». Such materials are generally porous. Example of such materials are pumice, perlite and vermiculite. The calcium carbonate content in the construction material according to the invention is usually higher than or equal to 0.15 wt %, preferably higher than or equal to 0.5 wt %, more preferably higher than or equal 1 wt %, yet more preferably higher than or equal to 2 wt %, still more preferably higher than or equal to 4 wt %, in particular more preferably higher than or equal to 5 wt % and most preferably higher than or equal to 6 wt % of the total weight of the construction material excluding water. It is generally lower than or equal to 65 wt %, preferably lower than or equal to 50 wt %, more preferably lower than or equal to 40 wt %, still more preferably lower than or equal to 30 wt %, yet more preferably lower than or equal to 20 wt %, in particular more preferably lower than or equal to 10 wt % and most preferably lower than or equal to 8 wt %.

The binder content in the construction material according to the invention is usually higher than or equal to 1 wt %, preferably higher than or equal to 2 wt %, more preferably higher than or equal to 5 wt %, still more preferably higher than or equal to 10 wt % and most preferably higher than or equal to 20 wt % of the total weight of the construction material excluding water. It is generally lower than or equal to 90 wt %, preferably lower than or equal to 70 wt %, more preferably lower than or equal to 50 wt %, still more preferably lower than or equal to 30 wt % and most preferably lower than or equal to 25 wt %.

The pigment content in the construction material according to the invention is usually higher than or equal to 0.01 wt %, preferably higher than or equal to 1 wt %, more preferably higher than or equal to 10 wt %, still more preferably higher than or equal to 30 wt % and most preferably higher than or equal to 40 wt % of the total weight of the construction material excluding water. It is generally lower than or equal to 90 wt %, preferably lower than or equal to 70 wt %, more preferably lower than or equal to 60 wt %, still more preferably lower than or equal to 50 wt % and most preferably lower than or equal to 45 wt %.

The skilled man will know the amount of water to be added to the construction material to obtain the desired rheological properties required by the application.

The construction materials according to the invention generally contain the calcium carbonate particles in an amount higher than or equal to 0.1 wt % and lower than or equal to 50 wt % with respect to the total weight of the construction material.

After hardening, the construction materials according to the invention usually have a sound absorption coefficient ($\alpha$n) higher than or equal to 0.05, preferably higher than or equal to 0.2, more preferably higher than or equal to 0.4, still more preferably higher than or equal to 0.5, yet more preferably higher than or equal to 0.75, in particular more preferably higher than or equal to 0.9 and most preferably higher than or equal to 0.95. The sound absorption coefficient is generally lower than or equal to 1. After hardening, the construction materials according to the invention usually have an airflow resistance (r) higher than or equal to 0.01 Ns/m$^4$ and lower than or equal to 1000 Ns/m$^4$.

The dry premixes according to the invention most often contain the calcium carbonate particles in an amount higher than or equal to 0.15 wt % and lower than or equal to 65 wt % with respect to the total weight of the dry premix.

The wet premixes according to the invention in general contain the calcium carbonate particles in an amount higher than or equal to 0.15 wt % and lower than or equal to 65 wt % with respect to the total weight of the wet premix.

The construction materials, the dry premixes and the wet premixes of the invention can be obtained by mixing the various components described above in adequate ratios following any sequence of mixing. For example, all the compounds can be added simultaneously in a vessel or they can be added sequentially in a vessel, the sequence of addition being of no importance, or some of them can be premixed before being added to the others.

In a first preferred embodiment according to the invention, the construction material or the dry premix or the wet premix is obtained by blending the various components taken separately. The product is then ready to use or to market.

In a second preferred embodiment according to the invention, the construction material is obtained by blending adequate ratios of two mixtures, the first one, mixture A, containing water, the calcium carbonate particles used in the invention, the pigments and other additives and the second one, mixture B, containing the mineral aggregate, the binder and other additives. The calcium carbonate particles content of mixture A is usually higher than or equal to 0.1 wt %, preferably higher than or equal to 10 wt % and most preferably higher than or equal to 40 wt % of the total weight of the mixture. It is generally lower than or equal to 90 wt %, preferably lower than or equal to 70 wt %, and most preferably lower than or equal to 50 wt %. The pigment content of mixture A is usually higher than or equal to 0.01 wt %, preferably higher than or equal to 1 wt % and most preferably higher than or equal to 40 wt % of the total weight of the mixture. It is generally lower than or equal to 90 wt %, preferably lower than or equal to 70 wt %, and most preferably lower than or equal to 50 wt %. The mineral aggregate content of mixture B is usually higher than or equal to 0.1 wt %, preferably higher than or equal to 10 wt % and most preferably higher than or equal to 40 wt % of the total weight of the mixture. It is generally lower than or equal to 90 wt %, preferably lower than or equal to 70 wt %, and most preferably lower than or equal to 50 wt %. The binder content of mixture B is usually higher than or equal to 0.1 wt %, preferably higher than or equal to 10 wt % and most preferably higher than or equal to 40 wt % of the total weight of the mixture. It is generally lower than or equal to 90 wt %, preferably lower than or equal to 70 wt %, and most preferably lower than or equal to 50 wt %. The construction material resulting from the blend is ready to use.

This second embodiment allows a better reproducibility of the color of the resulting hardened material.

In a first variant for both embodiments, the mineral aggregate comprises mainly sand. The sand content is of the mineral aggregate is higher than or equal to 10 % by weight, preferably higher than or equal to 25 %, more preferably higher than or equal to 50 % and most preferably higher than or equal to 99 %. A sand content of 100 % is particularly suitable. This variant is preferred when the construction material is intended to be used for coatings.

In a second variant for both embodiments, the mineral aggregate comprises mainly a lightweight inert material. The lightweight inert material content of the mineral aggregate is higher than or equal to 10 % by weight, preferably higher than or equal to 25 %, more preferably higher than or equal to 50 % and most preferably higher than or equal to 99 %. A lightweight inert material content of 100 % is particularly suitable. This variant is preferred when the construction material is intended to be used for preparing sound absorption materials.

The construction material according to the invention can be used for coating floors, ceilings, dividing wall, walls, doors, traps, etc. The coatings can have a thickness from 0.1 cm to 5 cm. They can be applied by any technique usually used in the construction industry : by hand, by spray-gun, by spattering, etc. The construction material can be used as mortar and sticking materials between bricks or for the manufacture of molded concrete compounds.

After hardening, the construction material according to the invention exhibits an improved resistance to abrasion. That resistance (Taber abrasion test) is measured according to the the standard ISO 7784-2: 1997. The construction material according to the invention is applied on a fiber-cement support (area 100 cm$^2$) to give a coating thickness of 0.1 - 5 cm. The coating support is dried until constant weight. The dried coating is then submitted to abrasion resistance test with a sand paper P60 disk rotating at 60 $\pm$ 2 rpm for 50 - 1000 cycles. The abrasion resistance is measured by the weight loss of the dried coating. The weight loss is usually lower than or equal to 100 wt %, preferably lower than or equal to 70 wt %, more preferably lower than or equal to 50 wt %, still more preferably lower than or equal to 30 wt % and most preferably lower than or equal to 10 wt %. The weight loss is usually higher than or equal to 0 wt %, preferably higher than or equal to 1 wt %, more preferably higher than or equal to 2 wt %, still more preferably higher than or equal to 5 wt % and most preferably lower than or equal to 8 wt %.

After hardening, the construction material according to the invention exhibits a higher porosity. The pore volume, the average pore radius and the porosity are measured by mercury porosimetry using ThermoFinnigan Pascal 140 (pores model: ink bottle; Hg pressure up to 400 KPa) and Pascal 240 (pores model: ink bottle; Hg pressure up to 200 MPa) porosimeters. The pore volume is usually higher than or equal to 1 mm$^3$/g, preferably higher than or equal to 50 mm$^3$/g, more preferably higher than or equal to 100 mm$^3$/g, still more preferably higher than or equal to 130 mm$^3$/g and most preferably higher than or equal to 140 mm$^3$/g. It is generally lower than or equal to 500 mm$^3$/g, preferably lower than or equal to 400 mm$^3$/g, more preferably lower than or equal to 300 mm$^3$/g, still more preferably lower than or equal to 200 mm$^3$/g and most preferably lower than or equal to 150 mm$^3$/g. The average pore radius is usually higher than or equal to 0.001 $\mu$m, preferably higher than or equal to 0.01 $\mu$m, more preferably higher than or equal to 0.05 $\mu$m, still more preferably higher than or equal to 0.1 $\mu$m and most preferably higher than or equal to 0.4 $\mu$m. It is generally lower than or equal to 100 $\mu$m, preferably lower than or equal to 10 $\mu$m, more preferably lower than or equal to 5 $\mu$m, still more preferably lower than or equal to 1 $\mu$m and most preferably lower than or equal to 0.6 $\mu$m.

After hardening, the construction material according to the invention exhibits an increased permeability to water vapor and a decreased permeability to liquid water. Without wishing to be bound by any theory, it is believed that the permeability properties are related to the porosity of the cured material.

The permeability to water vapour is obtained by measuring the vapour permeability coefficient according to the standard UNI EN 1015-19:2002. The vapour permeability coefficient ($\mu$) is usually higher than or equal to 0.01, preferably higher than or equal to 0.1, more preferably higher than or equal to 1, still more preferably higher than or equal to 10 and most preferably higher than or equal to 20. It is generally lower than or equal to 100, preferably lower than or equal to 50, more preferably lower than or equal to 40, still more preferably lower than or equal to 30 and most preferably lower than or equal to 25.

The permeability to liquid water is measured by the standard UNI EN ISO 1015-18: 2004. The permeability is usually higher than or equal to 0.01 kg/(m$^2$ min$^{0.5}$), preferably higher than or equal to 0.05 kg/(m$^2$ min$^{0.5}$), more preferably higher than or equal to 0.1 kg/(m$^2$ min$^{0.5}$), still more preferably higher than or equal to 0.5 kg/ (m$^2$ min$^{0.5}$) and most preferably higher than or equal to 1 kg/(m$^2$ min$^{0.5}$). It is generally lower than or equal to 50 kg/(m$^2$ min$^{0.5}$), preferably lower than or equal to 10 kg/(m$^2$ min$^{0.5}$), more preferably lower than or equal to 5 kg/(m$^2$ min$^{0.5}$), still more preferably lower than or equal to 3 kg/(m$^2$ min$^{0.5}$) and most preferably lower than or equal to 2 kg/(m$^2$ min$^{0.5}$).

Before hardening, the construction material according to the invention exhibits a consistence assessed using an internal method. To test the consistence an Abrams like cone (dimension: $r_1$ = 2.5 cm, $r_2$ = 5 cm, h = 15 cm) was used. The procedure consists of filling the cone with the mixture, lifting the cone immediately, and measuring the extent to which the mixture has subsided after two minutes. A higher value of subsidence corresponds to a better consistence. The subsidence is usually higher than or equal to 0.1 cm, preferably higher than or equal to 0.5 cm, more preferably higher than or equal to 1 cm, still more preferably higher than or equal to 3 cm and most preferably higher than or equal to 5 cm. It is generally lower than or equal to 15 cm, preferably lower than or equal to 12 cm, more preferably lower than or equal to 10 cm, still more preferably lower than or equal to 7 cm and most preferably lower than or equal to 5 cm.

Before hardening, the construction material according to the invention exhibits an improved workable life assessed using an internal method. The procedure consists of filling an Abrams like cone (dimension: $r_1$ = 2.5 cm, $r_2$ = 5 cm, h = 15 cm) with the mixture, lifting the cone immediately, and measuring the extent to which the mixture has subsided after two minutes. The workable life is the time necessary to have a cone subsidence of only 3 cm. The improved workable life is obtained without any adverse effect on the hardening time of the construction material. The workable life is usually higher than or equal to 0, preferably higher than or equal to 1 minute, more preferably higher than or equal to 1 hour, still more preferably higher than or equal to 10 hours and most preferably higher than or equal to 1 day. It is generally lower than or equal to 10 days, preferably lower than or equal to 5 days, more preferably lower than or equal to 3 days and most preferably lower than or equal to 2 days.

After hardening, the construction material according to the invention exhibits a lower surface water absorption. The test was performed dripping 20 cm$^3$ of water onto the surface (it is 15 cm in length) of the sample (thickness less of 1 cm), using a burette (drip flow = 8 cm$^3$/min). The amount of water absorbed was measured by the difference in weight before and after the test. The permeability water absorbed is usually higher than or equal to 0.1 cm$^3$, preferably higher than or equal to 1 cm$^3$, more preferably higher than or equal to 2 cm$^3$, still more preferably higher than or equal to 3 cm$^3$ and most preferably higher than or equal to 5 cm$^3$. It is generally lower than or equal to 20 cm$^3$, preferably lower than or equal to 15 cm$^3$, more preferably lower than or equal to 10 cm$^3$, still more preferably lower than or equal to 7 cm$^3$ and most preferably lower than or equal to 5 cm$^3$.

After hardening, the construction material according to the invention exhibits an improved flexural strength. The test was performed on prism-shaped samples of dimension 4x4x16 cm. The flexural strength of each mixture was obtained by stressing the sample at three different points. It is supported at two points and a force is applied at the centre. Failure (fracture) occurs when the maximum tensile stress reaches a critical value. The force was applied on the sample with a constant speed of 0.7 mm/min. The higher the force needed to damage the sample and the stronger the resistance of the sample. The flexural strength is usually higher than or equal to 0.01 N/mm$^2$, preferably higher than or equal to 0.05 N/mm$^2$, more preferably higher than or equal to 0.1 N/mm$^2$, still more preferably higher than or equal to 0.5 N/mm$^2$ and most preferably higher than or equal to 1 N/mm$^2$. It is generally lower than or equal to 50 N/mm$^2$, preferably lower than or equal to 20 N/mm$^2$, more preferably lower than or equal to 10 N/mm$^2$, still more preferably lower than or equal to 5 N/mm$^2$ and most preferably lower than or equal to 2 N/mm$^2$.

After hardening, the construction material according to the invention exhibits an improved impact resistance. The impact resistance is measured by the impact energy according to the following method. A guided cylindrical weight of mass p is freely dropped from a height h on a supported sample of the hardened construction material of 1 cm of thickness. Each collision has to be made in a zone of the specimen that has not been deformed by the previous collisions. After the first breaking sign, it is possible to calculate the impact energy by the following equation :

$$\text{Impact Energy} = \text{h} \cdot \text{p} \cdot 9,81$$

The impact energy is usually higher than or equal to 0.001 J, preferably higher than or equal to 0.1 J, more preferably higher than or equal to 1 J, still more preferably higher than or equal to 10 J and most preferably higher than or equal to 100 J. It is generally lower than or equal to 100000 J, preferably lower than or equal to 50000 J, more preferably lower than or equal to 10000 J, still more preferably lower than or equal to 1000 J and most preferably lower than or equal to 500 J.

After hardening, the construction material according to the invention exhibits an improved resistance to ultraviolet light. In order to evaluate the weathering resistance, the samples are exposed to UV-condensation cycles (4 hours with lamp on, at T=60°C and 4 hours with lamp off, in condensation, $\lambda$ = 313 nm), according to the standard UNI 10686:1998. When the mixture was ready, the preliminary work of preparing the sample for this test was performed by adding coloured paste. The colored paste added is usually higher than or equal to 0.1 wt %, preferably higher than or equal to 1 wt %, more preferably higher than or equal to 2 wt %, still more preferably higher than or equal to 3 wt % and most preferably higher than or equal to 6 wt %. It is generally lower than or equal to 50 wt %, preferably lower than or equal to 30 wt %, more preferably lower than or equal to 20 wt %, still more preferably lower than or equal to 10 wt % and most preferably lower than or equal to 6 wt %.

The resistance to ultraviolet light is measured by $\Delta E$ factor where $\Delta E$ is $(\Delta L^2 + \Delta a^{*2} + \Delta b^{*2})^{1/2}$ in C.I.E.La*b* color space system (UNI 8941: 1987). The chromatic change $\Delta E$ values after 300 and 1500 hours of QUV test are summarized in Table 3.

The chromatic change $\Delta E$ value after 1500 hours of QUV test is usually higher than or equal to 0.01, preferably higher than or equal to 0.1, more preferably higher than or equal to 0.2, still more preferably higher than or equal to 0.5 and most preferably higher than or equal to 0.9. It is generally lower than or equal to 10, preferably lower than or equal to 5, more preferably lower than or equal to 3, still more preferably lower than or equal to 2 and most preferably lower than or equal to 1.

After hardening, the construction material according to the invention exhibits improved sound absorption properties.

The sound absorption is measured by the standard ISO 10534-2: 1998 (determination of sound absorption coefficient and impedance in impedance tubes. Part 2: transfer-function method), by the standard ISO 13472-1: 2002 (measurement of sound absorption properties of road surfaces in situ. Part 1 : extended surface method) and also by an internal method (measurement of sound absorption of road surfaces in situ using an intensimetric method). The

sound absorption coefficient ($\alpha$n) is higher than or equal to 0.05, preferably higher than or equal to 0.2, more preferably higher than or equal to 0.4, still more preferably higher than or equal to 0.5, yet more preferably higher than or equal to 0.75, in particular more preferably higher than or equal to 0.9 and most preferably higher than or equal to 0.95. The sound absorption coefficient is generally lower than or equal to 1.

The airflow resistance is measured by the standard UNI-EN 29053: 1994 (materials for acoustical applications: determination of airflow resistance). The airflow resistance is usually higher than or equal to 0.1 Ns/m$^4$, preferably higher than or equal to 1 Ns/m$^4$ and most preferably higher than or equal to 10 Ns/m$^4$ of the total weight of the mixture. It is generally lower than or equal to 1000 Ns/m$^4$, preferably lower than or equal to 100 Ns/m$^4$, and most preferably lower than or equal to 20 Ns/m$^4$.

Based on the foregoing, the present invention also relates to a first kind of compositions to be used in the preparation of construction materials or dry premixes containing :

- at least one inorganic binder selected from cement, hydraulic lime and gypsum, and
- particles of calcium carbonate according to the invention having a BET specific surface area higher than or equal to 10 m$^2$/g.

In addition thereto, the first kind of compositions can further contain at least one of the following :

- at least one mineral aggregate selected from sand and lightweight mineral aggregates,
- at least one coloring compound selected from pigments and dyes,
- at least one other additive selected from polymeric resins, surface-active agents, colloids, thickeners, alkali agents, co-solvents, wetting and dispersing agents, biocides, foaming agents, anti-foaming agents, anti-settling agents, fibers and organic binders.

The present invention also relates to a second kind of compositions to be used in the preparation of construction materials or dry premixes or wet premixes, containing:

- at least one mineral aggregate selected from sand and lightweight mineral aggregates, and
- particles of calcium carbonate according to the invention having a BET specific surface area higher than or equal to 10 m$^2$/g.

In addition thereto the second kind of compositions can contain at least one of the following:

- at least one inorganic binder selected from cement, hydraulic lime and gypsum,
- at least one coloring compound selected from pigments and dyes, and
- at least one other additive selected from polymeric resins, surface-active agents, colloids, thickeners, alkali agents, co-solvents, wetting and dispersing agents, biocides, foaming agents, anti-foaming agents, anti-settling agents, fibers, organic binders.

The invention further relates to a third kind of compositions to be used in the preparation of construction materials or dry premixes or wet premixes containing :

- at least one additive selected from polymeric resins, surface-active agents, colloids, thickeners, alkali agents, co-solvents, wetting and dispersing agents, biocides, foaming agents, anti-foaming agents, anti-settling agents, fibers and organic binders,
- particles of calcium carbonate according to the invention having a BET specific surface area higher than or equal to 10 m$^2$/g.

In addition thereto, the third kind of compositions can contain at least one of the following:

- At least one inorganic binder selected from cement, hydraulic lime and gypsum,
- At least one mineral aggregate selected from sand and lightweight mineral aggregates, and
- At least one coloring compound selected from pigments and dyes.

Finally, the invention relates to a fourth kind of compositions to be used in the preparation of construction materials or dry premixes or wet premixes, containing:

- at least one coloring compound selected from pigments and dyes,

- particles of calcium carbonate according to the invention having a BET specific surface area higher than or equal to 10 m$^2$/g.

In addition thereto, the fourth kind of compositions can contain at least one of the following:

- at least one inorganic binder selected from cement, hydraulic lime and gypsum,
- at least one mineral aggregate selected from sans and lightweight mineral aggregates, and
- at least one additive selected from polymeric resins, surface-active agents, colloids, thickeners, alkali agents, co-solvents, wetting and dispersing agents, biocides, foaming agents, anti-foaming agents, anti-settling agents, fibers and organic binders.

The following examples further illustrate the invention but are not to be construed as limiting its scope.

Examples 1 to 4 (according to the invention)

Nanofibers and nano-sheaves of precipitated calcium carbonate have been obtained according to the procedures described in examples 1 and 5 of patent application WO 03004414 of SOLVAY (Société Anonyme).
Hollow spheres have been obtained by spray-drying of a suspension of coated PCC.
Nano-rhombohedrons have been obtained by precipitation of calcium carbonate, followed by coating and drying.
The characteristics of the various PCC are summarized in Table 1.

Examples 5 to 13 and 17 to 19 (according to the invention)

All the mixture are prepared using a concrete mixer. During the hardening time (28 days), the samples are maintained at temperature in the range of 15 to 30 °C and relative humidity in the range of 30 to 70 %.
Blend 1: has been prepared by adding 3275 g of sand and 750 g of water to 1055 g of cement (Portland cement 32,5R, type II, B LL).
Blend 2: has been prepared by adding 3370 g of sand and 850 g of water to 1027 g of hydraulic lime (Calix, Italcementi).
Blend 3: has been prepared by adding 3370 g of sand and 850 g of water to 513.5 g of cement (Portland cement 32,5R, type II, B LL) and 513.5 g of hydraulic lime (Calix, Italcementi).
Examples 5, 8, 11 and 17: 80 g of the PCC prepared according to examples 1 to 4 have been added to 2400 g of blend 1.
Examples 6, 9, 12 and 18: 150 g of the PCC prepared according to examples 1 to 4 have been added to 2400 g of blend 2.
Examples 7, 10, 13 and 19: 150 g of the PCC prepared according to examples 1 to 4 have been added to 2400 g of blend 3.
The results of the various tests performed on the hardened above-described construction materials are reported in Table 3.

Examples 14 to 16 (not according to the invention)

The procedure of the previous examples has been followed except that 150 g of sand have been added to each of the previous blends. The various compositions are summarized in Table 2. The results of the various tests performed on the hardened above-described compositions are reported in Table 3.

Examples 20 to 22 (according to the invention)

The following premixes have been prepared by adding 455 g of water, 61.5 g of nano-rhombohedrons, 0.85 g of Ricem fibers, 0.6 g of foaming agent (Sitren 619 Goldschmidt) and 165 g of Perlite (Peralit 20 Perlite Italiana) to 371 g of cement (Portland cement 32.5 R, type II, B-LL), blend 4, to 371 g of hydraulic lime (Calix, Italcementi), blend 5 or to 371 g of bastard lime (50 wt % of cement and 50 wt % of HL), blend 6.
The various compositions are summarized in Table 2.
The results of the various tests performed on the hardened above-described compositions are reported in Table 4.

Examples 23 to 25 (not according to the invention)

Polyurethane, polyester fibers and Melamine have been respectively used.

Table 1

| Example | Surface area ($m^2$/g) | Nano-structure |
|---|---|---|
| 1 | 70 | Nano-fibers |
| 2 | 24 | Nano-sheaves |
| 3 | 20 | Hollow-spheres |
| 4 | 23 | Nano-rhombohedrons |

Table 2

| Example | PCC (example) | Blend |
|---|---|---|
| 5 | Nano-Fibres (1) | 1 (Cement) |
| 6 | Nano-Fibres (1) | 2 (Hydraulic Lime) |
| 7 | Nano-Fibres (1) | 3 (Bastard Lime) |
| 8 | Nano-Sheaves (2) | 1 (Cement) |
| 9 | Nano-Sheaves (2) | 2 (Hydraulic Lime) |
| 10 | Nano-Sheaves (2) | 3 (Bastard Lime) |
| 11 | Hollow Spheres (3) | 1 (Cement) |
| 12 | Hollow Spheres (3) | 2 (Hydraulic Lime) |
| 13 | Hollow Spheres (3) | 3 (Bastard Lime) |
| 14 | Sand | 1 (Cement) |
| 15 | Sand | 2 (Hydraulic Lime) |
| 16 | Sand | 3 (Bastard Lime) |
| 17 | Nano-rhombohedrons (4) | 1 (Cement) |
| 18 | Nano -rhombohedrons (4) | 2 (Hydraulic Lime) |
| 19 | Nano-rhombohedrons (4) | 3 (Bastard Lime) |
| 20 | Nano -rhombohedrons (4) | 4 (Cement) |
| 21 | Nano -rhombohedrons (4) | 5 (Hydraulic Lime) |
| 22 | Nano -rhombohedrons (4) | 6 (Bastard Lime) |

EP 1 893 546 B1

**Table 3**

r = red 2040, y = yellow 2030, bl = blue, w = white, g = green and bk = black

| Example | Impact resistance (J) | Consistence Subsidence (cm) | Abrasion resistance Loss of weight (g)/number of cycles | Flexural strenght (N/mm²) | Surface water absorption (cm³) | Water Vapour permeability Permeability coefficient (µ) | Water Liquid Absorption coefficient Permeability (kg/(m².min^0.5)) | QUV test ΔE | Porosity (%) |
|---|---|---|---|---|---|---|---|---|---|
| 5 | - | - | 33.27/53 | - | - | - | - | - | 31.28 |
| 6 | - | - | 84.24/60 | - | - | - | - | - | 33.76 |
| 7 | - | - | - | - | - | - | - | - | 32.56 |
| 8 | 1.3 | 3.60 | 33.87/500 | 0.891 | - | 30 | 0.41 | - | 27.74 |
| 9 | - | 5.67 | 17.20/50 | 0.214 | 4.95 | 22 | 1.69 | 1.94r/1.09y 1.08bl1.096w 2.06g/1.04bk (300 h) | 31.90 |
| 10 | - | 6.08 | 18.54/100 47.69/250 | 0.399 | 6.95 | - | 1.04 | - | 28.98 |
| 11 | ‡ | - | 38.76/200 53.55/400 | - | - | - | - | 0.67r/0.54y | 29.49 |
| 12 | - | - | 8.65/100 72.08/300 | - | - | - | - | - | 29.21 |
| 13 | - | - | 14.67/100 34.33/250 | - | - | - | - | - | 27.83 |
| 14 | 1.1 | 3.20 | 34.33/500 | 0.585 | - | 35 | 0.43 | - | 29.31 |
| 15 | - | 3.20 | 43.09/50 | 0.194 | 13.15 | 21 | 2.26 | 0.75r/0.63y 0.89bl1,06w 1.80g/0.77bk (300 h) | 31.73 |
| 16 | - | 3.65 | 26.89/100 70.69/250 | 0.363 | 13.0 | - | 1.33 | 2.93r/2.15y (1500 h) | 28.40 |
| 17 | 1.6 | 3.00 | 33.79/500 | - | - | 38 | 0.28 | - | - |
| 18 | - | 1.50 | 27.98/50 | - | 7.16 | 21 | 1.06 | - | - |
| 19 | - | - | - | - | - | - | - | - | - |

13

Table 4

| Sound absorption coefficient ($\alpha$n) | 0.80 | - | 0.90 | 0.41 | 0.31 | 0.49 |
|---|---|---|---|---|---|---|
| Airflow resistance [Ns/m$^4$] | 40 | - | 30 | 6000 | 4600 | 11000 |
| Abrasion resistance Loss of weight (g)/number of cycles | 5.81/50 | - | 10.05/50 | - | - | - |
| Example | 20 | 21 | 22 | 23 | 24 | 25 |

Example 26 (according to the invention)

A ready to use blend (1 "A" + 2 "B") of plaster ready (finish layer of the wall) has been prepared. Key performances were the higher abrasion resistance and lower water absorption in comparison with standard plasters. To prepare 100 kg of ready to use plaster, we used 3 bags of 25 kg ("B") and 1 bag of 18 liters (equivalent to 25 kg) ("A"). The blend was used at 5 kg / sq m (3-4 mm thickness).

• **FORMULA "A" (slurry containing Sheaves, water, pigments and additives) : Pigmented slurry water based containing Sheaves (PVC bags of 6 or 18 liters) :**

| | | |
|---|---|---|
| - Water: | 57.24 % | |
| - Natrosol MHBr 250: | 0.62 % | (thickener agent) |
| - AMP 95: | 0.25 % | (alkali agent) |
| - Propylene Glycol: | 0.24 % | (co-solvent) |
| - Byk 180: | 2.96 % | (wetting-dispersing agent) |
| - Biopol VR 20: | 0.11 % | (biocide) |
| - Pigment: | 13.03 % | |
| - Nano-Sheaves: | 20.85 % | (6 % in totalformula, i.e. 1A + 2B) |
| - ATS Byk (019+024): | 0.03 % | (defoaming agent) |
| - XP 2721: | 0.53 % | (wetting-dispersing agent) |
| - ATS 2081: | 0.01 % | (defoaming agent) |
| - Elotex WS45 Powder: | 3.95 % | (organic binder) |
| - Byk 420: | 0.18 % | (anti-setting agent) |
| - TOTAL: | 100 % | |

• **FORMULA "B": Solid blend of sand and lime (25 kg bags)**

| | |
|---|---|
| - Sand: | 73 % |
| - Hydraulic Lime: | 24 % |
| - Cement: | 3 % |
| - TOTAL: | 100 % |

It is possible to change the "B" formula, using only cement or a different ratio hydraulic lime/cement.

Example 27 (according to the invention)

A non pigmented sound absorption coating for indoor walls was prepared_:

| | |
|---|---|
| Hydraulic lime | 15.80 % |
| Cement | 22.40 % |
| Perlite | 15.70 % |
| Nano-rhombohedrons | 5.85 % |
| Synthetic fibers | 0.10 % |
| Foaming agent | 0.05 % |
| Water | 40.10 % |

(continued)

| Total | 100 % |
|---|---|

It is possible to replace hydraulic lime with cement to increase the mechanical resistance of the coating.

Ex : <u>Example 28</u> (according to the invention)

<u>A pigmented sound absorption coating for indoor walls was prepared</u> :

*Component A formula:*

| Water | 28.10 % | |
|---|---|---|
| AMP 95 | 0.35 % | (alkali agent) |
| Propylene glycol | 1.95 % | (co-solvent) |
| Byk 180 | 7.85 % | (wetting-dispersing agent) |
| Biopol VR 20 | 0.15 % | (biocide) |
| Pigment | 23.50 % | |
| Nano-rhombohedrons | 38.10 % | |
| Total | 100 % | |

*Final product*:

| Hydraulic lime | 9.00 % |
|---|---|
| Cement | 28.70 % |
| Perlite | 14.10 % |
| Component A | 15.30 % |
| Synthetic fibers | 0.10 % |
| Foaming agent | 0.050 % |
| Water | 32.75 % |
| Total | 100 % |

## Claims

1. Use of particles of calcium carbonate having a BET specific surface area higher than or equal to 10 m$^2$/g in the production of construction materials comprising at least one inorganic binder selected from cement, hydraulic lime, and gypsum, wherein the calcium carbonate particles are coated with at least one coating agent selected from carboxylic acids, carboxylic acid salts, polyacrylic acids, polyacrylic acid salts, and mixtures thereof; wherein the calcium carbonate is precipitated calcium carbonate, and wherein the precipitated calcium carbonate particles are clusters of primary particles and exhibit a structure selected from hollow spheres, nano-fibers, nano-sheaves, nano-rosaries, nanoplatelets and nano-accordions.

2. Construction material comprising at least one inorganic binder selected from cement, hydraulic lime, and gypsum, wherein particles of calcium carbonate having a BET specific surface area higher than or equal to 10 m$^2$/g and being coated with at least one coating agent selected from carboxylic acids, carboxylic acid salts, polyacrylic acids, polyacrylic acid salts, and mixtures thereof, have been incorporated; wherein the calcium carbonate is precipitated calcium carbonate, and wherein the precipitated calcium carbonate particles are clusters of primary particles and exhibit a structure selected from hollow spheres, nano-fibers, nano-sheaves, nano-rosaries, nanoplatelets and nano-accordions.

3. Use according to claim 1 wherein the construction material contains plaster, stucco, cement render, mortar and concrete, or mixtures thereof.

4. Construction material according to claim 2 wherein the construction material contains plaster, stucco, cement render, mortar and concrete, or mixtures thereof.

5. Construction material according to claim 2 or 4 containing:

   • At least one inorganic binder selected from cement, hydraulic lime and gypsum,
   • At least one mineral aggregate selected from sand and lightweight mineral aggregates,
   • Optionally at least one coloring compound selected from pigments and dyes,
   • water, and
   • optionally at least one other additive selected from polymeric resins, surface-active agents, colloids, thickeners, alkali agents, co-solvents, wetting and dispersing agents, biocides, foaming agents, anti-foaming agents, anti-settling agents, fibers and organic binders.

6. Construction material according to any one of claims 2 and 4 to 5, wherein the calcium carbonate particles are incorporated in an amount higher than or equal to 0.15 wt % and lower than or equal to 65 wt % with respect to the total weight of the construction material, excluding water.

7. Dry premix to be mixed at least with water for the preparation of construction materials according to any one of claims 2 and 4 to 6, consisting of:

   • at least one inorganic binder selected from cement, hydraulic lime and gypsum
   • at least one mineral aggregate selected from sand and lightweight mineral aggregates,
   • optionally at least one coloring compound selected from pigments and dyes, and
   • optionally at least one other additive selected from polymeric resins, surface-active agents, colloids, thickeners, alkali agents, co-solvents, wetting and dispersing agents, biocides, foaming agents, anti-foaming agents, anti-settling agents, fibers and organic binders,

   wherein particles of calcium carbonate having a BET specific surface area higher than or equal to 10 $m^2/g$ and being coated with at least one coating agent selected from carboxylic acids, carboxylic acid salts, polyacrylic acids polyacrylic acid salts, and mixtures thereof have been incorporated; wherein the calcium carbonate is precipitated calcium carbonate, and wherein the precipitated calcium carbonate particles are clusters of primary particles and exhibit a structure selected from hollow spheres, nano-fibers, nano-sheaves, nano-rosaries, nanoplatelets and nano-accordions.

8. Dry premix according to claim 7, wherein the calcium carbonate particles are incorporated in an amount higher than or equal to 0.15 wt % and lower than or equal to 65 wt % with respect to the total weight of the dry premix.

9. Wet premix to be mixed with at least one binder and at least one foaming agent for the preparation of construction materials according to any one of claims 2 and 4 to 6 consisting of:

   • at least one mineral aggregate selected from sand and lightweight mineral aggregates,
   • optionally at least one coloring compound selected from pigments and dyes,
   • optionally at least one other additive selected from polymeric resins, surface-active agents, colloids, thickeners, alkali agents, co-solvents, wetting and dispersing agents, biocides, anti-foaming agents, anti-settling agents, fibers, organic binders, and
   • water,

   wherein particles of calcium carbonate having a BET specific surface area higher than or equal to 10 $m^2/g$ and coated with at least one coating agent selected from carboxylic acids, carboxylic acid salts, polyacrylic acids, polyacrylic acid salts, and mixtures thereof have been incorporated; wherein the calcium carbonate is precipitated calcium carbonate, and wherein the precipitated calcium carbonate particles are clusters of primary particles and exhibit a structure selected from hollow spheres, nano-fibers, nano-sheaves, nano-rosaries, nanoplatelets and nano-accordions.

10. Wet premix according to claim 9, wherein the calcium carbonate particles are incorporated in an amount higher than or equal to 0.15 wt % and lower than or equal to 65 wt % with respect to the total weight of the wet premix.

11. Composition to be used in the preparation of construction materials, dry premixes, or wet premixes according to any one of claims 2 and 4 to 10 containing at least:

   • particles of calcium carbonate having a BET specific surface area higher than or equal to 10 $m^2/g$ and coated

with at least one coating agent selected from carboxylic acids, carboxylic acid salts, polyacrylic acids polyacrylic acid salts, and mixtures thereof; wherein the calcium carbonate is precipitated calcium carbonate, and wherein the precipitated calcium carbonate particles are clusters of primary particles and exhibit a structure selected from hollow spheres, nano-fibers, nano-sheaves, nano-rosaries, nanoplatelets and nano-accordions,

at least one inorganic binder selected from cement, hydraulic lime, and gypsum; and

• at least one compound selected from

  ◦ mineral aggregates selected from sand and lightweight mineral aggregates,
  ◦ coloring compounds selected from pigments and dyes, and
  ◦ other additives selected from polymeric resins, surface-active agents, colloids, thickeners, alkali agents, co-solvents, wetting and dispersing agents, biocides, foaming agents, anti-foaming agents, anti-settling agents, fibers and organic binders.

12. Use according to claims 1 and 3, wherein the calcium carbonate particles have a BET specific surface area higher than or equal to 15 m$^2$/g, preferably higher than or equal to 20 m$^2$/g and most preferably higher than or equal to 40 m$^2$/g.

13. Construction material, dry premix, wet premix, or composition according to any one of claims 2 and 4 to 11, wherein the calcium carbonate particles have a BET specific surface area higher than or equal to 15 m$^2$/g, preferably higher than or equal to 20 m$^2$/g and most preferably higher than or equal to 40 m$^2$/g.

14. Use of calcium carbonate particles having a BET specific surface area higher than or equal to 10 m$^2$/g and being coated with at least one coating agent selected from carboxylic acids, carboxylic acid salts, polyacrylic acids, polyacrylic acid salts, and mixtures thereof; wherein the calcium carbonate is precipitated calcium carbonate, and wherein the precipitated calcium carbonate particles are clusters of primary particles and exhibit a structure selected from hollow spheres, nano-fibers, nano-sheaves, nano-rosaries, nanoplatelets and nano-accordions, for the at least partial replacement of sand in construction materials or in dry or wet premixes of construction materials for at least:

  • improving the resistance to abrasion of the construction material after hardening,
  • increasing the porosity of the construction material after hardening,
  • increasing the permeability to water vapor of the construction material after hardening,
  • decreasing the permeability to liquid water of the construction material after hardening,
  • improving the consistence of the construction material before hardening,
  • improving the workable life time of the construction material before hardening,
  • lowering the surface water absorption of the construction material after hardening,
  • improving the flexural strength of the construction material after hardening,
  • improving the impact resistance of the construction material after hardening, or
  • improving the resistance to ultraviolet light of the construction material after hardening.

15. Use of calcium carbonate particles having a BET specific surface area higher than or equal to 10 m$^2$/g and being coated with at least one coating agent selected from carboxylic acids, carboxylic acid salts, polyacrylic acids, polyacrylic acid salts, and mixtures thereof; wherein the calcium carbonate is precipitated calcium carbonate, and wherein the precipitated calcium carbonate particles are clusters of primary particles and exhibit a structure selected from hollow spheres, nano-fibers, nano-sheaves, nano-rosaries, nanoplatelets and nano-accordions, for the at least partial replacement of lightweight mineral aggregates in construction materials or in dry or wet premixes of construction materials for at least

  • improving the sound absorption of the construction material after hardening, or
  • improving the heat insulation of the construction material after hardening.

**Patentansprüche**

1. Einsatz von Calciumcarbonatpartikeln bei der Herstellung von Baumaterialien, wobei die Partikel eine Oberflächenkennzahl nach Brunauer-Emmett-Teller (BET) von größer oder gleich 10 m$^2$/g aufweisen und wobei die Baumaterialien mindestens ein anorganisches Bindemittel enthalten, ausgewählt aus Zement, hydraulischem Kalk und Gips, wobei die Calciumcarbonatpartikel mit mindestens einem Beschichtungsmittel beschichtet sind, ausgewählt aus Carbonsäuren, Carbonsäuresalzen, Polyacrylsäuren, Polyacrylsäuresalzen und Gemischen davon; wobei es sich bei dem Calciumcarbonat um gefälltes Calciumcarbonat handelt und wobei es sich bei den gefällten Calciumcarbonatpartikeln um Primärteilchen-Cluster handelt, die eine Struktur ausgewählt aus Hohlkugeln, Nanofasern, Nanoscheiben, Nanokränzen, Nanoplättchen oder Z-förmige-Nanostrukturen aufweisen.

2.   Baumaterialien, die mindestens ein anorganisches Bindemittel enthalten, ausgewählt aus Zement, hydraulischem Kalk oder Gips, wobei die Calciumcarbonatpartikel eine BET-Oberflächenkennzahl von 10 m$^2$/g oder mehr aufweisen und mit mindestens einem Beschichtungsmittel beschichtet sind, ausgewählt aus darin integrierten Carbonsäuren, Carbonsäuresalzen, Polyacrylsäuren, Polyacrylsäuresalzen und Gemischen davon; wobei es sich bei dem Calciumcarbonat um gefälltes Calciumcarbonat handelt und wobei es sich bei den gefällten Calciumcarbonatpartikeln um Primärteilchen-Cluster handelt, die eine Struktur ausgewählt aus Hohlkugeln, Nanofasern, Nanoscheiben, Nanokränzen, Nanoplättchen oder Z-förmige-Nanostrukturen aufweisen.

3.   Verwendung gemäß Anspruch 1, wobei das Baumaterial Gips, Stuck, Zementputz, Mörtel und Beton oder Gemische davon enthält.

4.   Baumaterialien gemäß Anspruch 2, wobei das Baumaterial Gips, Stuck, Zementputz, Mörtel, und Beton oder Gemische davon enthält.

5.   Baumaterialien gemäß Anspruch 2 oder 4, ferner umfassend:

     • mindestens ein anorganisches Bindemittel, ausgewählt aus Zement, hydraulischem Kalk und Gips,
     • mindestens einen mineralischen Zuschlagstoff, ausgewählt aus Sand und leichten mineralischen Zuschlagstoffen,
     • wahlweise mindestens eine Farbverbindung, ausgewählt aus Pigmenten und Farbstoffen,
     • Wasser und
     • wahlweise mindestens ein weiteres Zusatzmittel, ausgewählt aus Polymerharzen, oberflächenaktiven Stoffen, Kolloiden, Verdickungsmitteln, Alkalimitteln, Zusatzlösungsmitteln, Benetzungsmitteln und Dispergiermitteln, Bioziden, Schaummitteln, Antischaummitteln, Antiabsetzmitteln, Fasern und organischen Bindemitteln.

6.   Baumaterial gemäß einem der Ansprüche 2, 4 oder 5, wobei die Calciumcarbonatpartikel - bezogen auf das Gesamtgewicht des Baumaterials, ohne Wasser - in einer Menge von mehr als oder gleich 0,15 Gewichtsprozent und weniger als oder gleich 65 Gewichtsprozent enthalten sind.

7.   Trockene Vormischung zum Mischen mit mindestens Wasser zur Herstellung von Baustoffen gemäß einem der Ansprüche 2 oder 4 bis 6, bestehend aus:

     • mindestens einem anorganischen Bindemittel, ausgewählt aus Zement, hydraulischem Kalk und Gips,
     • mindestens einem mineralischen Zuschlagstoff, ausgewählt aus Sand oder leichten mineralischen Zuschlagstoffen,
     • wahlweise mindestens einer Farbverbindung, ausgewählt aus Pigmenten und Farbstoffen und
     • wahlweise mindestens einem weiteren Zusatzmittel, ausgewählt aus Polymerharzen, oberflächenaktiven Stoffen, Kolloiden, Verdickungsmitteln, Alkalimitteln, Zusatzlösungsmitteln, Benetzungsmitteln und Dispergiermitteln, Bioziden, Schaummitteln, Antischaummitteln, Antiabsetzmitteln, Fasern und organischen Bindemitteln.

wobei die Calciumcarbonatpartikel eine BET-Oberflächenkennzahl von 10 m$^2$/g oder mehr aufweisen und mit mindestens einem Beschichtungsmittel beschichtet sind, ausgewählt aus darin integrierten Carbonsäuren, Carbonsäuresalzen, Polyacrylsäuren, Polyacrylsäuresalzen und Gemischen davon; wobei es sich bei dem Calciumcarbonat um gefälltes Calciumcarbonat handelt und wobei es sich bei den gefällten Calciumcarbonatpartikeln um Primärteilchen-Cluster handelt, die eine Struktur ausgewählt aus Hohlkugeln, Nanofasern, Nanoscheiben, Nanokränzen, Nanoplättchen oder Z-förmige-Nanostrukturen aufweisen.

8.   Trockene Vormischung gemäß Anspruch 7, wobei die Calciumcarbonatpartikel - bezogen auf das Gesamtgewicht der trockenen Vormischung - in einer Menge von mehr als oder gleich 0,15 Gewichtsprozent und weniger als oder gleich 65 Gewichtsprozent enthalten sind.

9.   Feuchte Vormischung zum Mischen mit mindestens einem Bindemittel und mindestens einem Schaummittel zur Herstellung von Baustoffen gemäß einem der Ansprüche 2 oder 4 bis 6, bestehend aus:

     • mindestens einem mineralischen Zuschlagstoff, ausgewählt aus Sand und leichten mineralischen Zuschlagstoffen,
- wahlweise mindestens einer Farbverbindung, ausgewählt aus Pigmenten und Farbstoffen,
- wahlweise mindestens einem weiteren Zusatzmittel, ausgewählt aus Polymerharzen, oberflächenaktiven Stoffen, Kolloiden, Verdickungsmitteln, Alkalimitteln, Zusatzlösungsmitteln, Benetzungsmitteln und Dispergiermittel, Bioziden, Antischaummitteln, Antiabsetzmitteln, Fasern, organischen Bindemitteln und
- Wasser,

wobei die Calciumcarbonatpartikel eine BET-Oberflächenkennzahl von 10 m$^2$/g oder mehr aufweisen und mit mindestens einem Beschichtungsmittel beschichtet sind, ausgewählt aus darin integrierten Carbonsäuren, Carbonsäuresalzen, Polyacrylsäuren, Polyacrylsäuresalzen und Gemischen davon; wobei es sich bei dem Calciumcarbonat um gefälltes Calciumcarbonat handelt und wobei es sich bei den gefällten Calciumcarbonatpartikeln um Primärteilchen-Cluster handelt, die eine Struktur ausgewählt aus Hohlkugeln, Nanofasern, Nanoscheiben, Nanokränzen, Nanoplättchen oder Z-förmige-Nanostrukturen aufweisen.

10. Feuchte Vormischung gemäß Anspruch 9, wobei die Calciumcarbonatpartikel - bezogen auf das Gesamtgewicht der feuchten Vormischung - in einer Menge von mehr als oder gleich 0,15 Gewichtsprozent und weniger als oder gleich 65 Gewichtsprozent enthalten sind.

11. Zusammensetzung zur Verwendung bei der Herstellung von Baustoffen, trockenen oder feuchten Vormischungen gemäß einem der Ansprüche 2 oder 4 bis 10, wobei diese mindestens enthält:

- Calciumcarbonatpartikel mit einer BET-Oberflächenkennzahl von 10 m$^2$/g oder mehr, die mit mindestens einem Beschichtungsmittel beschichtet sind, ausgewählt aus Carbonsäuren, Carbonsäuresalzen, Polyacrylsäuren, Polyacrylsäuresalzen und Gemischen davon; wobei es sich bei dem Calciumcarbonat um gefälltes Calciumcarbonat handelt und wobei es sich bei den gefällten Calciumcarbonatpartikeln um Primärteilchen-Cluster handelt, die eine Struktur ausgewählt aus Hohlkugeln, Nanofasern, Nanoscheiben, Nanokränzen, Nanoplättchen oder Z-förmige-Nanostrukturen aufweisen und mindestens ein anorganisches Bindemittel enthält, ausgewählt aus Zement, hydraulischem Kalk und Gips; und
- mindestens eine Verbindung, ausgewählt aus:

  - mineralischen Zuschlagstoffen, ausgewählt aus Sand und leichten mineralischen Zuschlagstoffen,
  - Farbverbindungen, ausgewählt aus Pigmenten und Farbstoffen und
  - weiteren Zusatzmitteln, ausgewählt aus Polymerharzen, oberflächenaktiven Stoffen, Kolloiden, Verdickungsmitteln, Alkalimitteln, Zusatzlösungsmitteln, Benetzungsmitteln und Dispergiermitteln, Bioziden, Schaummitteln, Antischaummitteln, Antiabsetzmitteln, Fasern und organischen Bindemitteln.

12. Verwendung gemäß den Ansprüchen 1 und 3, wobei die Calciumcarbonatpartikel eine BET-Oberflächenkennzahl von mehr als oder gleich 15 m$^2$/g, vorzugsweise von mehr als oder gleich 20 m$^2$/g und idealerweise von mehr als oder gleich 40 m$^2$/g aufweisen.

13. Baumaterialien, trockene Vormischungen, feuchte Vormischungen oder Zusammensetzungen gemäß den Ansprüchen 2 oder 4 bis 11, wobei die Calciumcarbonatpartikel eine BET-Oberflächenkennzahl von mehr als oder gleich 15 m$^2$/g, vorzugsweise von mehr als oder gleich 20 m$^2$/g und idealerweise von mehr als oder gleich 40 m$^2$/g aufweisen.

14. Verwendung von Calciumcarbonatpartikeln, die eine BET-Oberflächenkennzahl von 10 m$^2$/g oder mehr aufweisen und mit mindestens einem Beschichtungsmittel beschichtet sind, ausgewählt aus Carbonsäuren, Carbonsäuresalzen, Polyacrylsäuren, Polyacrylsäuresalzen und Gemischen davon; wobei es sich bei dem Calciumcarbonat um gefälltes Calciumcarbonat handelt und wobei es sich bei den gefällten Calciumcarbonatpartikeln um Primärteilchen-Cluster handelt, die eine Struktur ausgewählt aus Hohlkugeln, Nanofasern, Nanoscheiben, Nanokränzen, Nanoplättchen oder Z-förmige-Nanostrukturen aufweisen, wobei diese Calciumcarbonatpartikel den Sand in Baustoffen und trockenen bzw. feuchten Baustoff-Vormischungen zumindest teilweise ersetzen und mindestens bewirken:

- die Abriebfestigkeit des Baustoffs nach dem Aushärten wird verbessert,
- die Porosität des Baustoffs nach dem Aushärten wird verbessert,
- die Wasserdampf-Durchlässigkeit des Baustoffs nach dem Aushärten wird verbessert,
- die Durchlässigkeit des Baustoffs gegenüber flüssigem Wasser nach dem Aushärten wird verbessert,
- die Beschaffenheit des Baustoffs vor dem Aushärten wird verbessert,

• die Verarbeitbarkeitszeit des Baustoffs vor dem Aushärten wird verbessert,
• die Oberflächenwasseraufnahme des Baustoffs nach dem Aushärten wird verbessert,
• die Biegefestigkeit des Baustoffs nach dem Aushärten wird verbessert,
• die Schlagfestigkeit des Baustoffs nach dem Aushärten wird verbessert bzw.
• die UV-Beständigkeit des Baustoffs nach dem Aushärten wird verbessert.

15. Verwendung von Calciumcarbonatpartikeln, die eine BET-Oberflächenkennzahl von 10 m$^2$/g oder mehr aufweisen und mit mindestens einem Beschichtungsmittel beschichtet sind, ausgewählt aus Carbonsäuren, Carbonsäuresalzen, Polyacrylsäuren, Polyacrylsäuresalzen und Gemischen davon; wobei es sich bei dem Calciumcarbonat um gefälltes Calciumcarbonat handelt und wobei es sich bei den gefällten Calciumcarbonatpartikel um Primärteilchen-Cluster handelt, die eine Struktur ausgewählt aus Hohlkugeln, Nanofasern, Nanoscheiben, Nanokränzen, Nanoplättchen oder Z-förmige-Nanostrukturen aufweisen, wobei diese Calciumcarbonatpartikel die leichten mineralischen Zuschlagstoffe in Baustoffen und trockenen bzw. feuchten Baustoff-Vormischungen zumindest teilweise ersetzen und mindestens bewirken:

• die Schallabsorption des Baustoffs nach dem Aushärten wird verbessert bzw.
• die Wärmedämmung des Baustoffs nach dem Aushärten wird verbessert.


**Revendications**

1. Une utilisation de particules de carbonate de calcium ayant une surface spécifique BET supérieure ou égale à 10 m$^2$/g dans la production de matériaux de construction comprenant au moins un liant inorganique choisi parmi le ciment, la chaux hydraulique et le gypse, dans laquelle les particules de carbonate de calcium sont enrobées d'au moins un agent d'enrobage choisi parmi les acides carboxyliques, les sels d'acide carboxylique, les acides polyacryliques, les sels d'acide polyacrylique, et les mélanges de ceux-ci ; dans laquelle le carbonate de calcium est le carbonate de calcium précipité, et dans laquelle les particules de carbonate de calcium précipité sont des amas de particules primaires et présentent une structure choisie parmi les sphères creuses, les nanofibres, les nano-réas, les nano-rosaires, les nanoplaquettes et les nano-accordéons.

2. Un matériau de construction comprenant au moins un liant inorganique choisi parmi le ciment, la chaux hydraulique et le gypse, dans lequel les particules de carbonate de calcium ayant une surface spécifique BET supérieure ou égale à 10 m$^2$/g et étant enrobées d'au moins un agent d'enrobage choisi parmi les acides carboxyliques, les sels d'acide carboxylique, les acides polyacryliques, les sels d'acide polyacrylique, et les mélanges de ceux-ci, ont été incorporées ; dans lequel le carbonate de calcium est le carbonate de calcium précipité, et dans lequel les particules de carbonate de calcium précipité sont des amas de particules primaires et présentent une structure choisie parmi les sphères creuses, les nanofibres, les nano-réas, les nano-rosaires, les nanoplaquettes et les nano-accordéons.

3. L'utilisation selon la revendication 1 dans laquelle le matériau de construction contient du plâtre, du stuc, de l'enduit de ciment, du mortier et du béton, ou des mélanges de ceux-ci.

4. Le matériau de construction selon la revendication 2 dans lequel le matériau de construction contient du plâtre, du stuc, de l'enduit de ciment, du mortier et du béton, ou des mélanges de ceux-ci.

5. Le matériau de construction selon la revendication 2 ou 4 contenant :

• au moins un liant inorganique choisi parmi le ciment, la chaux hydraulique et le gypse,
• au moins un agrégat minéral choisi parmi le sable et les agrégats minéraux légers,
• éventuellement au moins un composé colorant choisi parmi les pigments et les colorants,
• de l'eau, et
• éventuellement au moins un autre additif choisi parmi les résines polymères, les agents tensioactifs, les colloïdes, les épaississants, les agents alcalins, les cosolvants, les agents mouillants et dispersants, les biocides, les agents moussants, les agents antimoussants, les agents anti-stabilisateurs, les fibres et les liants organiques.

6. Le matériau de construction selon l'une quelconque des revendications 2 et 4 à 5, dans lequel les particules de carbonate de calcium sont incorporées en une quantité supérieure ou égale à 0,15 % en poids et inférieure ou égale à 65 % en poids par rapport au poids total du matériau de construction, à l'exclusion de l'eau.

**7.** Le prémélange sec à mélanger au moins avec de l'eau pour la préparation de matériaux de construction selon l'une quelconque des revendications 2 et 4 à 6, constitué de :

- au moins un liant inorganique choisi parmi le ciment, la chaux hydraulique et le gypse
- au moins un agrégat minéral choisi parmi le sable et les agrégats minéraux légers,
- éventuellement au moins un composé colorant choisi parmi les pigments et les colorants, et
- éventuellement au moins un autre additif choisi parmi les résines polymères, les agents tensioactifs, les colloïdes, les épaississants, les agents alcalins, les cosolvants, les agents mouillants et dispersants, les biocides, les agents moussants, les agents antimoussants, les agents anti-stabilisateurs, les fibres et les liants organiques,

dans lequel les particules de carbonate de calcium ayant une surface spécifique BET supérieure ou égale à 10 $m^2/g$ et étant enrobées d'au moins un agent d'enrobage choisi parmi les acides carboxyliques, les sels d'acide carboxylique, les acides polyacryliques, les sels d'acide polyacrylique, et les mélanges de ceux-ci, ont été incorporées ; dans lequel le carbonate de calcium est le carbonate de calcium précipité, et dans lequel les particules de carbonate de calcium précipité sont des amas de particules primaires et présentent une structure choisie parmi les sphères creuses, les nanofibres, les nano-réas, les nano-rosaires, les nanoplaquettes et les nano-accordéons.

**8.** Le prémélange sec selon la revendication 7, dans lequel les particules de carbonate de calcium sont incorporées en une quantité supérieure ou égale à 0,15 % en poids et inférieure ou égale à 65 % en poids par rapport au poids total du prémélange sec.

**9.** Le prémélange humide à mélanger avec au moins un liant et au moins un agent moussant pour la préparation de matériaux de construction selon l'une quelconque des revendications 2 et 4 à 6, constitué de :

- au moins un agrégat minéral choisi parmi le sable et les agrégats minéraux légers,
- éventuellement au moins un composé colorant choisi parmi les pigments et les colorants,
- éventuellement au moins un autre additif choisi parmi les résines polymères, les agents tensioactifs, les colloïdes, les épaississants, les agents alcalins, les cosolvants, les agents mouillants et dispersants, les biocides, les agents antimoussants, les agents anti-stabilisateurs, les fibres, les liants organiques, et
- l'eau,

dans lequel les particules de carbonate de calcium ayant une surface spécifique BET supérieure ou égale à 10 $m^2/g$ et enrobées d'au moins un agent d'enrobage choisi parmi les acides carboxyliques, les sels d'acide carboxylique, les acides polyacryliques et les sels d'acide polyacrylique, et les mélanges de ceux-ci, ont été incorporés ; dans lequel le carbonate de calcium est le carbonate de calcium précipité, et dans lequel les particules de carbonate de calcium précipité sont des amas de particules primaires et présentent une structure choisie parmi les sphères creuses, les nanofibres, les nano-réas, les nano-rosaires, les nanoplaquettes et les nano-accordéons.

**10.** Le prémélange humide selon la revendication 9, dans lequel les particules de carbonate de calcium sont incorporées en une quantité supérieure ou égale à 0,15 % en poids et inférieure ou égale à 65 % en poids par rapport au poids total du prémélange humide.

**11.** La composition destinée à être utilisée dans la préparation de matériaux de construction, de prémélanges secs ou de prémélanges humides selon l'une quelconque des revendications 2 et 4 à 10 contenant au moins :

- des particules de carbonate de calcium ayant une surface spécifique BET supérieure ou égale à 10 $m^2/g$ et enrobées d'au moins un agent d'enrobage choisi parmi les acides carboxyliques, les sels d'acide carboxylique, les acides polyacryliques, les sels d'acide polyacrylique, et les mélanges de ceux-ci ; dans laquelle le carbonate de calcium est le carbonate de calcium précipité, et dans laquelle les particules de carbonate de calcium précipité sont des amas de particules primaires et présentent une structure choisie parmi les sphères creuses, les nanofibres, les nano-réas, les nano-rosaires, les nanoplaquettes et les nano-accordéons, au moins un liant inorganique choisi parmi le ciment, la chaux hydraulique et le gypse ; et
- au moins un composé choisi parmi

  ∘ les agrégats minéraux choisis parmi le sable et les agrégats minéraux légers,
  ∘ les composés colorants choisis parmi les pigments et les colorants, et
  ∘ les autres additifs choisis parmi les résines polymères, les agents tensioactifs, les colloïdes, les épaississants, les agents alcalins, les cosolvants, les agents mouillants et dispersants, les biocides, les agents moussants, les agents antimoussants, les agents anti-stabilisateurs, les fibres et les liants organiques.

12. L'utilisation selon les revendications 1 et 3, dans laquelle les particules de carbonate de calcium ont une surface spécifique BET supérieure ou égale à 15 m$^2$/g, préférablement supérieure ou égale à 20 m$^2$/g et plus préférablement supérieure ou égale à 40 m$^2$/g.

13. Le matériau de construction, le prémélange sec, le prémélange humide ou la composition selon l'une quelconque des revendications 2 et 4 à 11, dans lequel les particules de carbonate de calcium ont une surface spécifique BET supérieure ou égale à 15 m$^2$/g, préférablement supérieure ou égale à 20 m$^2$/g et plus préférablement supérieure ou égale à 40 m$^2$/g.

14. L'utilisation de particules de carbonate de calcium ayant une surface spécifique BET supérieure ou égale à 10 m$^2$/g et étant enrobées d'au moins un agent d'enrobage choisi parmi les acides carboxyliques, les sels d'acide carboxylique, les acides polyacryliques, les sels d'acide polyacrylique et les mélanges de ceux-ci ; dans laquelle le carbonate de calcium est le carbonate de calcium précipité, et dans laquelle les particules de carbonate de calcium précipité sont des amas de particules primaires et présentent une structure choisie parmi les sphères creuses, les nanofibres, les nano-réas, les nano-rosaires, les nanoplaquettes et les nano-accordéons, pour le remplacement au moins partiel du sable dans les matériaux de construction ou dans les prémélanges secs ou humides des matériaux de construction pour au moins :

- améliorer la résistance à l'abrasion du matériau de construction après durcissement,
- augmenter la porosité du matériau de construction après durcissement,
- augmenter la perméabilité à la vapeur d'eau du matériau de construction après durcissement,
- diminuer la perméabilité à l'eau liquide du matériau de construction après durcissement,
- améliorer la consistance du matériau de construction avant durcissement,
- améliorer la durée de vie pratique du matériau de construction avant durcissement,
- réduire l'absorption d'eau de surface du matériau de construction après durcissement,
- améliorer la résistance à la flexion du matériau de construction après durcissement,
- améliorer la résistance aux chocs du matériau de construction après durcissement, ou
- améliorer la résistance à la lumière ultraviolette du matériau de construction après durcissement.

15. Une utilisation de particules de carbonate de calcium ayant une surface spécifique BET supérieure ou égale à 10 m$^2$/g et étant enrobées d'au moins un agent d'enrobage choisi parmi les acides carboxyliques, les sels d'acide carboxylique, les acides polyacryliques, les sels d'acide polyacrylique et les mélanges de ceux-ci ; dans laquelle le carbonate de calcium est le carbonate de calcium précipité, et dans laquelle les particules de carbonate de calcium précipité sont des amas de particules primaires et présentent une structure choisie parmi les sphères creuses, les nanofibres, les nano-réas, les nano-rosaires, les nanoplaquettes et les nano-accordéons, pour le remplacement au moins partiel d'agrégats minéraux légers dans les matériaux de construction ou dans les prémélanges secs ou humides des matériaux de construction pour au moins

- améliorer l'absorption acoustique du matériau de construction après durcissement, ou
- améliorer l'isolation thermique du matériau de construction après durcissement.

Figure 1

Figure 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1192202 A
- WO 03004414 A
- US 6342100 B

**Non-patent literature cited in the description**

- Gebrüder Knauf Westdeutsche Gipswerke, Iphofen, Federal Republik of Germany. **WIRSCHING FRANZ.** Ullmann's Encyclopedia of Industrial Chemistry. Calcium Sulfate, vol. A4, 555
- Forschungsinstitut der Zementindustrie, Düsseldorf, Federal Republic of Germany. **SIEGBERT SPRUNG.** Ullmann's Encyclopedia of Industrial Chemistry. Cement and Concrete, vol. 7, 1
- Limetec Consultancy Services, Buxton, Derbyshire. **TONY OATES.** Ullmann's Encyclopedia of Industrial Chemistry. Lime and Limestone, vol. A 15, 317
- **ROUQUEROL, J. ; D. AVNIR ; C. W. FAIRBRIDGE ; D. H. EVERETT ; J. H. HAYNES ; N. PERNICONE ; J. D. F. RAMSAY ; K. S. W. SING ; K. K. UNGER.** Recommendations for the Characterization of Porous Solids. *Pure Appl. Chem.,* 1994, vol. 66, 1739